# EUROPEAN PATENT SPECIFICATION

(11) **EP 1 026 672 B1**
(45) Date of publication and mention of the grant of the patent: **07.07.2004**
(21) Application number: 00300844.8
(22) Date of filing: 03.02.2000
(51) Int. Cl.: G11B 7/007

(54) **Recording medium having wobbled groove tracks out of phase with wobbled land tracks, servo controlling apparatus using wobble signal and method thereof**
Aufzeichnungsträger bei dem die Phasen der rillenförmigen gewobbelten Spuren und die Phasen der stegförmigen gewobbelten Spuren verschoben sind, Servosteuerungsgerät das die gewobbelten Signale nutzt und entsprechendes Verfahren
Support d' enregistrement dont les pistes de sillons wobulés et les pistes des parties plates intermédiaires sont déphasées, appareil de servo contrôle utilisant les signaux wobulés et méthode correspondante

(30) Priority: 05.02.1999 KR 9903956
(43) Date of publication of application: 09.08.2000
(73) Proprietor: SAMSUNG ELECTRONICS CO., LTD., Suwon-City, Kyungki-do (KR)
(72) Inventor: Lee, Kyung-geun, 122502 Sibeom Hanshin Apt., Seongnam-city, Kyungki-do (KR)
(74) Representative: Robinson, Ian Michael

(56) References cited:
- EP-A- 0 838 808
- EP-A- 0 886 275
- US-A- 5 508 991
- PATENT ABSTRACTS OF JAPAN vol. 1999, no. 0430, 30 April 1999 (1999-04-30) & JP 11 007660 A (HITACHI LTD), 12 January 1999 (1999-01-12)
- PATENT ABSTRACTS OF JAPAN vol. 1999, no. 0430, 30 April 1999 (1999-04-30) & JP 11 016175 A (SONY CORP), 2 January 1999 (1999-01-02)

## Description

The present invention relates to an optical disk, and more particularly, to a recording medium having wobbled groove tracks which are out of phase with wobbled land tracks, a servo controlling apparatus for stably controlling movement of a pickup using a wobble signal picked up from the recording medium, and a method thereof.

In order to record and/or reproduce images of high definition television (HDTV) level, large-capacity recording and high-speed reproduction are necessary. Thus, there has been increasing demand for multi-media technology by which a large amount of information can be recorded and/or reproduced on a recording medium such as a rewritable or read-only high-density digital versatile disk (HD-DVD).

In order to satisfy the demand for large-capacity recording and high-speed reproduction, various kinds of methods have been proposed. For example, the area of a disk or the revolution speed may be increased, which is, however, impractical due to an increase in the size or volume of a disk or disk player and an increase in the manufacturing cost. Thus, increasing the recording density per unit area is more effective and desirable.

The size of a laser spot is proportional to the laser wavelength (λ) and is inversely proportional to the numerical aperture (NA) of an objective lens. Thus, in order to increase the recording density per unit area, the laser wavelength must be reduced or a track pitch must be reduced using an objective lens having a high NA. In rewritable or read-only HD-DVDs which are likely to see widespread use in the near future, the track pitch is reduced to about 0.30 to 0.34 µm. Thus, it is important for an optical pick-up unit (hereinafter, to be referred to simply as a pickup) to move to a desired position where data is written or read, and for it to be positioned thereon without error.

In disks to which a land/groove recording method is applied, the capability of a pickup to locate a basic recording unit or a specific area is largely affected by the configuration and disposition of addressing pits or grooves. Thus, in conventional optical disks adopting a land/groove recording method, in order to locate a physical area without error, both a physical address area and a wobble signal having a predetermined frequency are used in addressing. In the case where a physical identifier (ID) header is recorded on a disk, it must be shifted by half a track pitch from the center of a land or groove track to be recorded. Thus, the location of the physical ID header is used in accessing a desired land or groove track.

However, since the physical ID header (hereinafter, to be referred to simply as a PID) is shifted by half a track pitch from the center of a land or groove track to be recorded, in the case of one-beam mastering, position control depending on beam shift and light intensity are different between formation of a groove track and formation of a PID. Even in the case of two-beam mastering, it is quite difficult to precisely control beam position and light intensity. Also, if tilting of a disk occurs, since reproduction characteristics of PIDs in a land track and a groove track are different from each other, additional tilt correction methods must be adopted.

EP-A-838,808 discloses an optical disk comprising a substrate and a plurality of tracks formed on the substrate, wherein the plurality of tracks include groove tracks consisting of a plurality of grooves mutually spaced apart by a fixed space, and land tracks consisting of areas between the groove tracks wherein the borders between the groove tracks and the land tracks represent information using the waveforms from their wobbling patterns, wherein the period of the wobbling waveforms of the borders are constant in each border, but the wobbling waveforms of the opposite portions of the borders across the track are shifted in phase by a predetermined phase difference.

It is an aim of the present invention to provide a recording medium enabling accurate addressing and servo control, and that is easily mastered.

It is another aim of the present invention to provide a servo controlling apparatus for controlling movement of a pickup to a desired physical area in a stable manner, preferably with accurate addressing and servo control.

It is still another aim of the present invention to provide a servo controlling method for controlling movement of a pickup to a desired physical area in a stable manner with accurate addressing and servo control.

According to a first aspect of the present invention there is provided a recording medium having land tracks and groove tracks, wherein both the land tracks and the groove tracks are wobbled, and characterised in that the wobbles of either individual groove tracks or individual land tracks are out of phase and the wobbles of the other individual tracks are in phase; and the wobble of a a groove track have a phase difference of π with respect to the wobble of the next adjacent groove track in a radial direction, and the wobble of a land track has a phase difference of π with respect to the wobble of the next adjacent land track in a radial direction.

Preferably, the wobbles of individual groove tracks are out of phase and the wobbles of individual land tracks are in phase.

Preferably, the wobbles of individual groove tracks have a phase difference of π.

Preferably, the wobbles of individual land tracks are out of phase and the wobbles of individual groove tracks are in phase.

Preferably, the wobbles of individual land tracks have a phase difference of π.

Preferably, a physical identifier header for storing a track number and a sector number is prepitted in the center of a track.

Preferably, a physical identifier header for storing a track number and a sector number is shifted from the center of a track to then be prepitted.

According to a second aspect of the present invention there is provided a servo controlling apparatus for use in an optical recording and/or reproducing apparatus having a pickup unit for tracking an optical recording medium, characterised by the servo controlling apparatus including a photo detector to output as two channels a light signal reflected from the optical recording medium wherein the wobbles of either individual groove tracks or individual land tracks are out of phase and the wobbles of the other tracks are in phase, a wobble signal detector to detect a wobble signal from at least one channel from the two channels, a wobble signal determiner to determine whether a track which is currently tracked by the pickup unit is a groove track or a land track, and to provide a determination signal, and a controller to generate a control signal for controlling a servo for moving the pickup unit using the determination signal and the detected wobble signal.

Preferably, if the wobbles of individual land tracks and individual groove tracks are out of phase, the wobble signal detector detects a groove wobble signal and a land wobble signal from a first channel corresponding to the sum of two signals output from the photo detector, the detected groove wobble signal and the land wobble signal being out of phase with respect to each other.

Preferably, if the wobbles of individual groove tracks have a phase difference of π, the wobbles of individual land tracks are in phase, the wobbles formed on a groove track have a phase difference of π with respect to the wobbles of an adjacent groove track in a radial direction, and if the wobbles formed on a land track have a phase difference of π with respect to the wobbles of an adjacent land track in a radial direction, the wobble signal detector detects a groove wobble signal from a first channel corresponding to the difference between two signals output from the photo detector and the wobble signal detector detects a land wobble signal from a second channel corresponding to the sum of two signals output from the photo detector.

Preferably, if the wobbles of individual land tracks have a phase difference of π, the wobbles of individual groove tracks are in phase, the wobbles formed on a groove track have a phase difference of π with respect to the wobbles of an adjacent groove track in a radial direction, and if the wobbles formed on a land track have a phase difference of π with respect to the wobbles of an adjacent land track in a radial direction, the wobble signal detector detects a land wobble signal from a first channel corresponding to the difference between two signals output from the photo detector and the wobble signal detector detects a groove wobble signal from a second channel corresponding to the sum of two signals output from the photo detector.

Preferably, the controller detects the positions of the land tracks and the groove tracks and detects whether the groove/land track number is an odd number or an even number, according to the determination signal and the groove and land wobble signals.

According to a third aspect of the present invention there is provided a servo controlling method for use in an optical recording and/or reproducing apparatus having a pickup unit for tracking an optical recording medium, characterised in that the method comprises the steps of (a) outputting as two channels a light signal reflected from the optical recording medium wherein the wobbles of either individual groove tracks or individual land tracks are out of phase and the wobbles of the other individual tracks are in phase, (b) detecting a wobble signal from at least one channel from the two channels, (c) determining whether a track which is currently tracked by the pickup unit is a groove track or a land track to provide a determination signal, and (d) controlling a servo for moving the pickup unit using the determination signal and the detected wobble signal.

Preferably, if the wobbles of individual land tracks and individual groove tracks are out of phase, in the step (b), a groove wobble signal and a land wobble signal are detected from a first channel corresponding to the sum of two signals output from the photo detector, the detected groove wobble signal and the land wobble signal being out of phase.

Preferably, if the wobbles of individual groove tracks have a phase difference of π, the wobbles of individual land tracks are in phase, the wobbles formed on a groove track have a phase difference of π with respect to the wobbles of an adjacent groove track in a radial direction, and if the wobbles formed on a land track have a phase difference of π with respect to the wobbles of an adjacent land track in a radial direction, in the step (b), a groove wobble signal is detected from a first channel corresponding to the difference between two signals output in the step (a) and a land wobble signal is detected from a second channel corresponding to the sum of two signals output in the step (a).

Preferably, if the wobbles of individual land tracks have a phase difference of π, the wobbles of individual groove tracks are in phase, the wobbles formed on a land track have a phase difference of π with respect to the wobbles of an adjacent land track in a radial direction, and if the wobbles formed on a groove track have a phase difference of π with respect to the wobbles of an adjacent groove track in a radial direction, in the step (b), a land wobble signal is detected from a first channel corresponding to the difference between two signals output from the step (a) and a groove wobble signal is detected from a second channel corresponding to the sum of two signals output from the step (a).

Preferably, the method further comprises the step (e) of detecting the positions of the land tracks and the groove tracks and detecting whether the groove/land track number is an odd number or an even number according to the determination signal and the groove and land wobble signals.

For a better understanding of the invention, and to show how embodiments of the same may be carried into effect, reference will now be made, by way of example, to the accompanying diagrammatic drawings in which:
Figure 1 illustrates a conventional recording medium having wobbled groove tracks, wobbled land tracks and physical identifier (PID) areas;
Figures 2A and 2B show waveforms output from first and second channels, picked up from the recording medium shown in Figure 1;
Figure 3 illustrates a recording medium having wobbled groove tracks which are out of phase with wobbled land tracks according to an embodiment of the present invention;
Figures 4A and 4B show waveforms output from first and second channels, picked up from the recording medium shown in Figure 3; .
Figure 5 illustrates a recording medium having wobbled groove tracks which are out of phase with wobbled land tracks according to another embodiment of the present invention;
Figures 6A and 6B show waveforms output from first and second channels, picked up from the recording medium shown in Figure 5; and
Figure 7 is a circuit diagram of a servo controlling apparatus for controlling a pickup using a wobble signal according to an embodiment of the present invention.

Hereinafter, a recording medium having wobbled groove tracks which are out of phase with wobbled land tracks, a servo controlling apparatus using a wobble signal and a method thereof, according to the present invention, will be described with reference to the accompanying drawings.

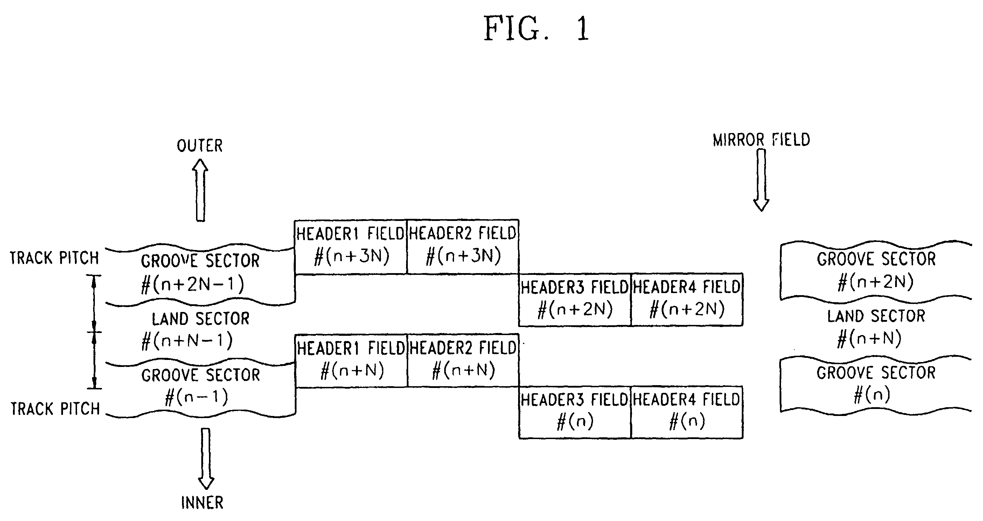

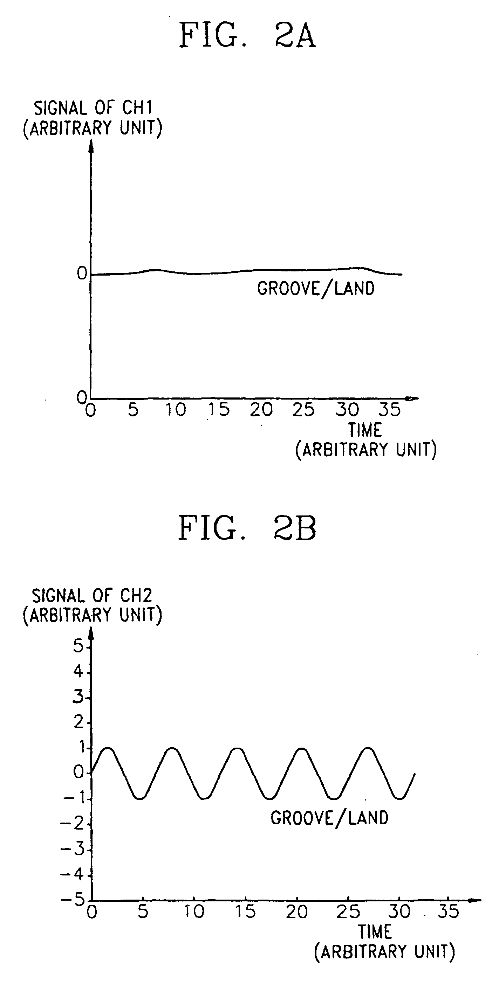

In order to better understand the present invention, a conventional recording medium having wobbled groove tracks and a wobble signal picked up from the recording medium will first be described, in conjunction with Figures 1 and 2.

Figure 1 illustrates a conventional recording medium having wobbled groove tracks, wobbled land tracks and physical identifier (PID) areas, in which the wobbled groove tracks and wobbled land tracks each have the same frequency and phase. Since a PID is recorded after it is shifted from the center of a land or groove track by half a track pitch, it is used for accessing a desired land or groove track. In other words, it is possible to know whether a track currently being picked up is either a land track or a groove track by using locations of the first PID through the fourth PID prepitted on physical address areas, which are denoted by Header 1 field, Header 2 field, Header 3 field and Header 4 field in the drawing, respectively. Also, the locations of the first PID through the fourth PID can be used as land/groove switching information. In Figure 1, reference character N denotes the number of sectors for each track. Also, the recording medium shown in Figure 1 includes a mirror field next to PIDs.

If a track is wobbled, as shown in Figure 1, a wobble signal can be obtained as a difference signal of two signals output from a photo detector, which typically consists of a bi-divisional photo diode, due to diffracted light from a land track and a groove track. Deviation of a light axis or the tilt of a disk can be obtained using the wobble signal. In other words, as shown in Figure 2A, a wobble signal is not generated at neither a groove track nor a land track in a first channel (CH1) corresponding to the sum of two signals output from the photo detector. As shown in Figure 2B, a wobble signal is generated in a second channel (CH2) corresponding to the difference between two signals of the photo detector. Thus, the wobble signal is generated at the groove track and the land track only in the second channel CH2 corresponding to the difference between signals at opposite sides in view of a line parallel to the track. Here, the wobble signal detected from the land track (hereinafter, to be referred to simply as a land wobble signal) and the wobble signal detected from the groove track (hereinafter, to be referred to simply as a groove wobble signal) have the same frequency and phase.

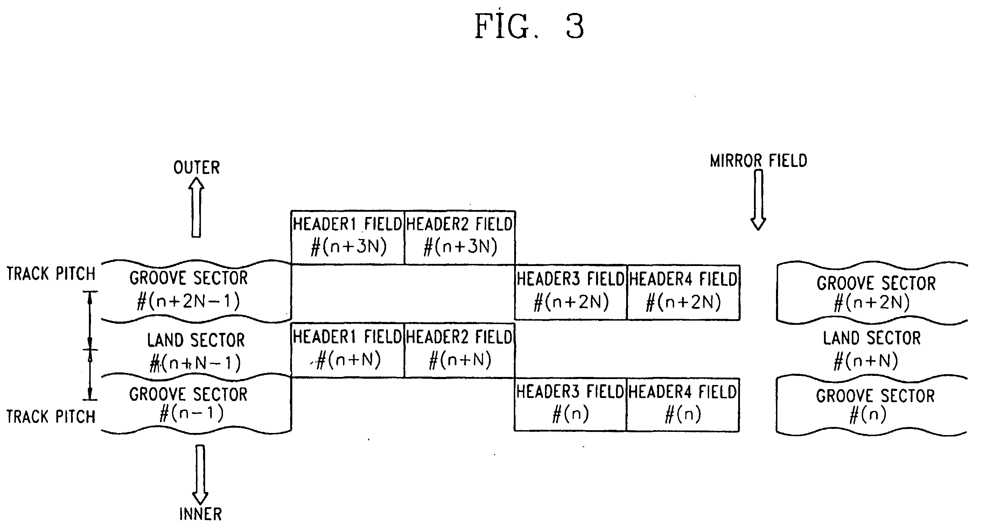

Figure 3 shows an exemplary recording medium according to a preferred embodiment of the present invention having wobbled groove tracks which are out of phase with wobbled land tracks. A disk usable in the present invention employs a polycarbonate substrate having a diameter of 120 mm, a thickness of 0.6 mm and a track pitch 0.34 µm. A light source used herein has a wavelength of 410 nm, and the read power is 0.5 mW.

In Figure 3, a wobble pattern formed on a groove track and a wobble pattern formed on a land track have a phase difference of π, and PIDs containing track and section numbers are positioned in the center of the track. Among a plurality of header fields, the first half of the head fields are shifted from the latter half of the header fields by a track pitch. Here, the PID may be recorded after it is shifted from the center of a land track or a groove track by half a track pitch, as shown in Figure 1.

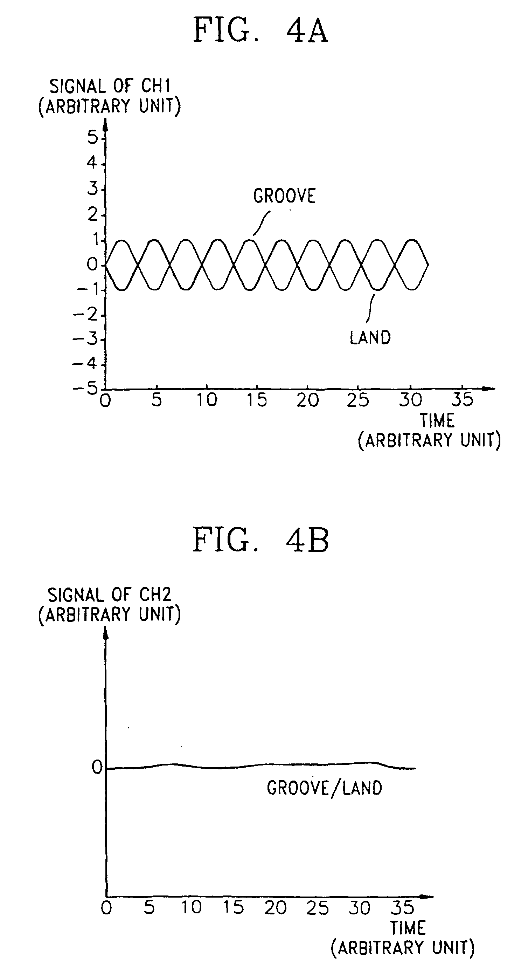

Thus, in an apparatus for recording and/or reproducing the recording medium having a configuration shown in Figure 3, a groove wobble signal which is out of phase with a land wobble signal, and the land wobble signal, are output to a first channel CH1 corresponding to the sum of two signals output from a photo detector, as shown in Figure 4A. In the drawing, the waveform of the groove wobble signal is indicated by a thin line and the waveform of the land wobble signal is indicated by a thick line, which may be reversed. As shown in Figure 4B, a wobble signal is output at neither the groove track nor the land track in the second channel CH2 corresponding to the difference between two signals output from the photo detector, i.e., the signals cancel each other out. Thus, all signals can be processed using the signals output to the first channel CH1, including user data, wobble signals and PIDs. Also, the position information of a groove track or a land track can be detected by the difference in phase with the wobble signals output to the first channel CH1.

Referring to Figure 3, since PIDs are positioned in the center of a track, it is not necessary to refract a beam during mastering. Even if two beams are used, the beam intensity only has to be controlled, but the precise position does not necessarily have to be controlled.

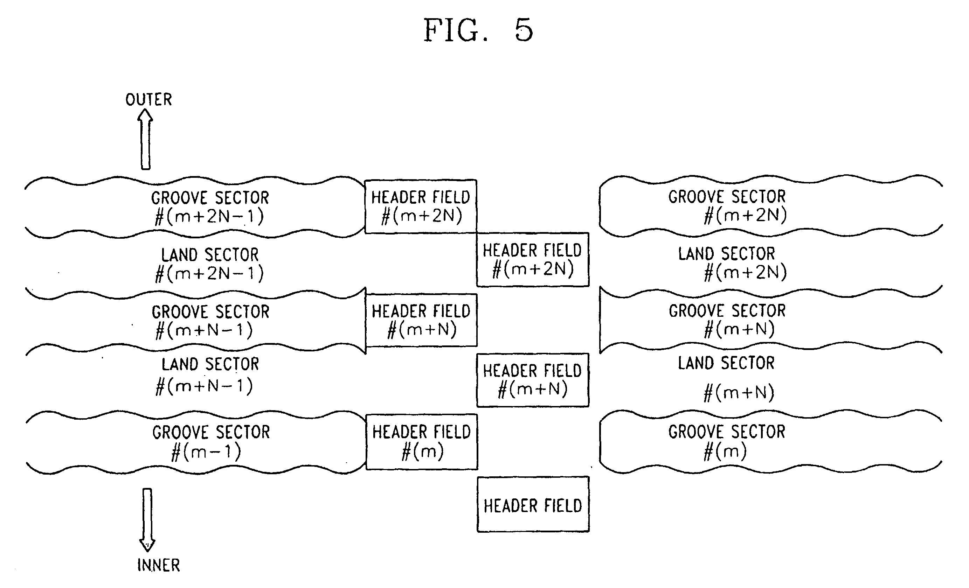

Figure 5 illustrates a recording medium having wobbled groove tracks which are out of phase with wobbled land tracks according to another embodiment of the present invention, in which the wobbles of individual groove tracks are out of phase by π and the wobbles of individual land tracks are in phase. Also, the phases of wobble signals even in an identical groove track are alternately opposite in a radial direction, and the phases of wobble signals even in an identical land track are alternately opposite in a radial direction. In other words, the differences in the wobble phases between a groove track and the very next groove track and between a land track and the very next land track are π.

Alternatively, the wobbles of individual land tracks may be out of phase by π and the wobbles of individual groove track may be in phase. Likewise, the differences in the wobble phases between a groove track and the directly next groove track and between a land track and the very next land track are π.

A PID area containing track and section numbers may coincide with the center of a track. Otherwise, as shown in Figure 1, the PID area may be shifted from the center of a land track or a groove track by half a track pitch. If the PID area coincides with the center of a track, beam refraction is not necessary during mastering, nor is it necessary to use two beams. Even if two beams are used, the beam intensity only has only to be controlled, but position control does not necessarily have to be controlled.

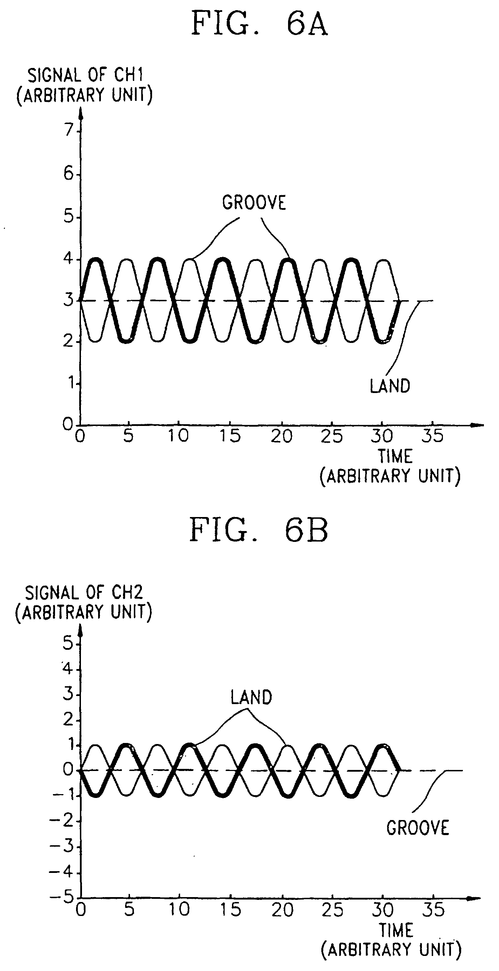

Thus, in an apparatus for recording on/reproducing from a recording medium having a configuration shown in Figure 5, that is, the wobbles of individual groove tracks are out of phase by π and the wobbles of individual land tracks are in phase, a groove wobble signal is output to a first channel CH1 corresponding to the sum of two signals output from a photo detector, as shown in Figure 6A. Also, as shown in Figure 6B, a land wobble signal is output to the second channel CH2 corresponding to the difference between two signals output from the photo detector. Likewise, in the recording medium on which the wobbles of individual land tracks are out of phase by n and the wobbles of individual groove tracks are in phase, a land wobble signal is output to the first channel CH1 and a groove wobble signal is output to the second channel CH2.

Thus, it is possible to determine whether a track currently being picked up is either a groove track or a land track, using the wobble signals of the first and second channels CH1 and CH2. Also, it is possible to control movement of a pickup to a desired physical area in a stable manner using both the wobble signals output to the first and second channels CH1 and CH2 and the PID generated in the center of the track. Further, in not only a rewritable disk but also a read-only disk, when the position of the pickup is switched from the land track to a groove track, or when the position of the pickup is switched from the groove track to a land track, the wobble signals output from the first and second channels CH1 and CH2 can be effectively used for servo control.

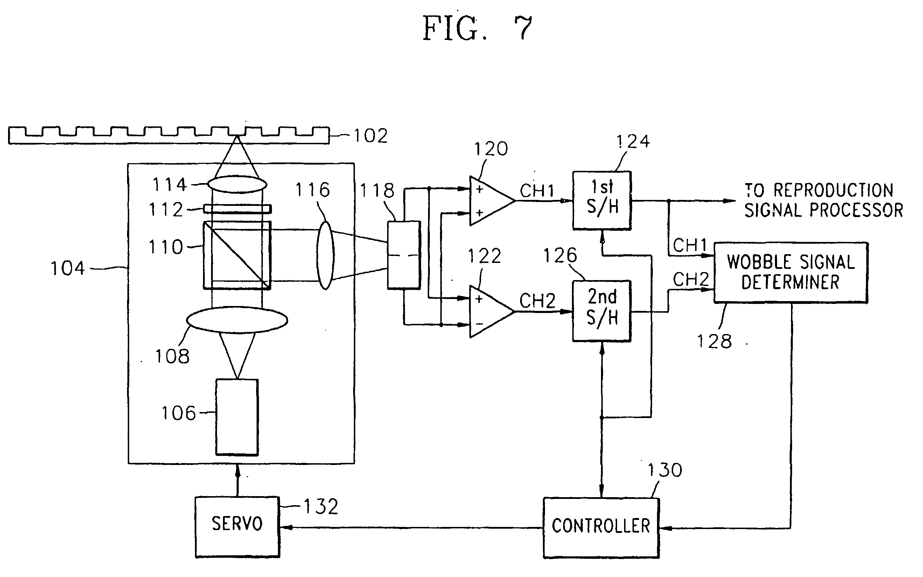

Figure 7 is a block diagram of a servo controlling apparatus for controlling a pickup suitable for use with the recording medium shown in Figure 5. In Figure 7, the servo controlling apparatus includes a recording medium 102, a pickup unit 104, a photo detector 118, first and second differential amplifiers 120 and 122, first and second sample-and-hold (S/H) circuits 124 and 126, a wobble signal determiner 128, a controller 130 and a servo unit 132. Here, the first and second differential amplifiers 120 and 122, and the first and second S/H circuits 124 and 126 can be collectively referred to as a wobble signal detector.

Now, the flow of a laser beam of the pickup unit 104 will be described. That is to say, a linearly polarized beam having an electrical field polarization plane parallel to the surface of land is emitted from a semiconductor laser 106. Thus, the beam spread elliptically is collimated by a collimator 108, which is also called a coupling lens.

In such a manner, the linearly polarized laser beam having a polarization plane parallel to the surface of land passes through a beam splitter 110 and an optical isolator which consists of a 1/4 wavelength plate 112 to then be a circular, polarized beam. The circular, polarized beam is reflected from a disk so that it passes through again the 1/4 wavelength plate 112 to then become a linearly polarized beam having a polarization plane perpendicular to the surface of land. Then, the linearly polarized beam is reflected from the beam splitter 110 to be directed toward a focusing lens, which is also called a detecting lens 116. Here, the beam incident into the disk 102 is a polarized beam, but a nonpolarized beam may be incident into the disk 102.

The photo detector 118 divides a light signal emitted through the focusing lens 116 and supplies the two divided signals to the first and second differential amplifiers 120 and 122. The first differential amplifier 120 supplies the sum of the two signals of the photo detector 118 to the first S/H circuit 124 through a first channel CH1, and the second differential amplifier 122 supplies the difference between the two signals of the photo detector 118 to the second S/H circuit 126 through a second channel CH2.

The groove (or land) wobble signal detected from the first channel CH1, output from the first S/H circuit 124 is supplied to the wobble signal determiner 128 and the controller 130. Also, the PID detected from the first channel CH1 through the first S/H circuit 124 is supplied to the controller 130, and a reproduction signal is supplied to a reproduction signal processor (not shown). The land (or groove) wobble signal detected from the second channel CH2, output from the second S/H circuit 126 is supplied to the wobble signal determiner 128 and the controller 130. Also, the controller 130 controls the timing of the first and second S/H circuits 124 and 126.

If a wobble signal is detected from the first channel CH1, the wobble signal determiner 128 determines that the wobble signal is in a groove (or land) track. If a wobble signal is detected from the second channel CH2, the wobble signal determiner 128 determines that the wobble signal is in a land (or groove) track. The controller 130 generates a control signal for controlling the servo unit 132 so that the pickup unit is moved to a desired physical area in a stable manner in accordance with a determination signal supplied from the wobble signal determiner 128, the groove (or land) wobble signal and the PID detected from the first channel CH1 through the first S/H circuit 124, and the land (or groove) wobble signal detected from the second channel CH2 through the second S/H circuit 126. The control signal may be a signal for controlling the revolution speed of a spindle motor or a signal for controlling a tracking servo.

If a pickup unit is currently tracking a groove (or land) track, a wobble signal is output to the first channel CH1. If a pickup unit is currently tracking a land (or groove) track, a wobble signal is output to the second channel CH2. Also, since the phases of wobbles of individual groove tracks and individual land tracks are alternated, it is possible to discriminate whether the groove or land track number is an odd number or an even number, thereby ensuring addressing.

Also, in a read-only disk adopting a land/groove recording method, the wobble signals of both first and second channels are used as switching signals between a groove track and a land track. Thus, PIDs having desired information can be recorded on a precise position by using only a track number and a sector number during mastering.

As described above, a groove track or a land track is determined from a recording medium having wobbled groove tracks which are out of phase with wobbled land tracks using wobble signals of two channels. Also, it is possible to determine whether a groove (or land) track number is an odd number or an even number. Thus, addressing is ensured and servo control can be effectively performed.

## Claims

1. A recording medium (102) having land tracks and groove tracks, wherein both the land tracks and the groove tracks are wobbled, and **characterised in that** the wobbles of either individual groove tracks or individual land tracks are out of phase and the wobbles of the other individual tracks are in phase; and the wobble of a groove track has a phase difference of π with respect to the wobble of the next adjacent groove track in a radial direction, and the wobble of a land track has a phase difference of π with respect to the wobble of the next adjacent land track in a radial direction.

2. The recording medium (102) according to claim 1, wherein the wobbles of individual groove tracks are out of phase and the wobbles of individual land tracks are in phase.

3. The recording medium (102) according to claim 1, wherein the wobbles of individual groove tracks have a phase difference of π.

4. The recording medium (102) according to claim 2, wherein the wobbles of individual land tracks are out of phase and the wobbles of individual groove tracks are in phase.

5. The recording medium (102) according to claim 4, wherein the wobbles of individual land tracks have a phase difference of π.

6. The recording medium (102) according to any of claims 1 to 5, wherein a physical identifier header for storing a track number and a sector number is prepitted in the center of a track.

7. The recording medium (102) according to any of claims 1 to 5, wherein a physical identifier header for storing a track number and a sector number is shifted from the center of a track to then be prepitted.

8. A servo controlling apparatus for use in an optical recording and/or reproducing apparatus having a pickup unit (104) for tracking an optical recording medium (102), **characterised by** the servo controlling apparatus comprising:
a photo detector (118) for outputting as two channels a light signal reflected from the optical recording medium (102) wherein the wobbles of either individual groove tracks or individual land tracks are out of phase and the wobbles of the other tracks are in phase;
a wobble signal detector (120,122,124,126) for detecting a wobble signal from at least one channel from the two channels;
a wobble signal determiner (128) for determining whether a track which is currently tracked by the pickup unit (104) is a groove track or a land track, and to provide a determination signal; and
a controller (130) for generating a control signal for controlling a servo for moving the pickup unit (104) using the determination signal and the detected wobble signal.

9. The servo controller according to claim 8, wherein if the wobbles of individual land tracks and individual groove tracks are out of phase, the wobble signal detector (120-126) detects a groove wobble signal and a land wobble signal from a first channel corresponding to the sum of two signals output from the photo detector, the detected groove wobble signal and the land wobble signal being out of phase with respect to each other.

10. The servo controller according to claim 8, wherein if the wobbles of individual groove tracks have a phase difference of π, the wobbles of individual land tracks are in phase, the wobbles formed on a groove track have a phase difference of π with respect to the wobbles of an adjacent groove track in a radial direction, and if the wobbles formed on a land track have a phase difference of n with respect to the wobbles of an adjacent land track in a radial direction, the wobble signal detector (120-126) detects a groove wobble signal from a first channel corresponding to the difference between two signals output from the photo detector (118) and the wobble signal detector (120-126) detects a land wobble signal from a second channel corresponding to the sum of two signals output from the photo detector (118).

11. The servo controller according to claim 10, wherein the controller (130) detects the positions of the land tracks and the groove tracks and detects whether the groove/land track number is an odd number or an even number, according to the determination signal and the groove and land wobble signals.

12. The servo controller according to claim 8, wherein if the wobbles of individual land tracks have a phase difference of π, the wobbles of individual groove tracks are in phase, the wobbles formed on a groove track have a phase difference of π with respect to the wobbles of an adjacent groove track in a radial direction, and if the wobbles formed on a land track have a phase difference of π with respect to the wobbles of an adjacent land track in a radial direction, the wobble signal detector (120-126) detects a land wobble signal from a first channel corresponding to the difference between two signals output from the photo detector (118) and the wobble signal detector (120-126) detects a groove wobble signal from a second channel corresponding to the sum of two signals output from the photo detector (118).

13. The servo controller according to claim 12, wherein the controller detects the positions of the land tracks and the groove tracks and detects whether the groove/land track number is an odd number or an even number, according to the determination signal and the groove and land wobble signals.

14. A servo controlling method for use in an optical recording and/or reproducing apparatus having a pickup unit (104) for tracking an optical recording medium (102), **characterised in that** the method comprises the steps of:
(a) outputting as two channels a light signal reflected from the optical recording medium (102) wherein the wobbles of either individual groove tracks or individual land tracks are out of phase and the wobbles of the other individual tracks are in phase
(b) detecting a wobble signal from at least one channel from the two channels;
(c) determining whether a track which is currently tracked by the pickup unit (104) is a groove track or a land track to provide a determination signal; and
(d) controlling a servo for moving the pickup unit (104) using the determination signal and the detected wobble signal.

15. The method according to claim 14, wherein if the wobbles of individual land tracks and individual groove tracks are out of phase, in the step (b), a groove wobble signal and a land wobble signal are detected from a first channel corresponding to the sum of two signals output from the photo detector, the detected groove wobble signal and the land wobble signal being out of phase.

16. The method according to claim 14, wherein if the wobbles of individual groove tracks have a phase difference of π, the wobbles of individual land tracks are in phase, the wobbles formed on a groove track have a phase difference of π with respect to the wobbles of an adjacent groove track in a radial direction, and if the wobbles formed on a land track have a phase difference of π with respect to the wobbles of an adjacent land track in a radial direction, in the step (b), a groove wobble signal is detected from a first channel corresponding to the difference between two signals output in the step (a) and a land wobble signal is detected from a second channel corresponding to the sum of two signals output in the step (a).

17. The method according to claim 16, further comprising the step (e) of detecting the positions of the land tracks and the groove tracks and detecting whether the groove/land track number is an odd number or an even number according to the determination signal and the groove and land wobble signals.

18. The method according to claim 14, wherein if the wobbles of individual land tracks have a phase difference of π, the wobbles of individual groove tracks are in phase, the wobbles formed on a land track have a phase difference of π with respect to the wobbles of an adjacent land track in a radial direction, and if the wobbles formed on a groove track have a phase difference of π with respect to the wobbles of an adjacent groove track in a radial direction, in the step (b), a land wobble signal is detected from a first channel corresponding to the difference between two signals output from the step (a) and a groove wobble signal is detected from a second channel corresponding to the sum of two signals output from the step (a).

19. The method according to claim 18, further comprising the step (e) of detecting the positions of the land tracks and the groove tracks and detecting whether the groove/land track number is an odd number or an even number according to the determination signal and the groove and land wobble signals.

## Patentansprüche

1. Aufzeichnungsmedium (102) mit Land-Spuren und Pit-Spuren, wobei sowohl die Land-Spuren als auch die Pit-Spuren gewobbelt sind, und **dadurch gekennzeichnet, dass** die Wobbelungen entweder einzelner Pit-Spuren oder einzelner Land-Spuren phasenversetzt sind und die Wobbelungen der anderen einzelnen Spuren phasengleich sind, und die Wobbelung einer Pit-Spur eine Phasendifferenz von π in Bezug auf die Wobbelung der in einer radialen Richtung nächsten angrenzenden Pit-Spur hat und die Wobbelung einer Land-Spur eine Phasendifferenz von π in Bezug auf die Wobbelung der in einer radialen Richtung nächsten angrenzenden Land-Spur hat.

2. Aufzeichnungsmedium (102) nach Anspruch 1, wobei die Wobbelungen einzelner Pit-Spuren phasenversetzt sind und die Wobbelungen einzelner Land-Spuren phasengleich sind.

3. Aufzeichnungsmedium (102) nach Anspruch 1, wobei die Wobbelungen einzelner Pit-Spuren eine Phasendifferenz von π haben.

4. Aufzeichnungsmedium (102) nach Anspruch 2, wobei die Wobbelungen einzelner Land-Spuren phasenversetzt sind und die Wobbelungen einzelner Pit-Spuren phasengleich sind.

5. Aufzeichnungsmedium (102) nach Anspruch 4, wobei die Wobbelungen einzelner Land-Spuren eine Phasendifferenz von π haben.

6. Aufzeichnungsmedium (102) nach einem der Ansprüche 1 bis 5, wobei ein physischer Identifier-Header zum Speichern einer Spur-Zahl und einer Sektor-Zahl in der Mitte einer Spur als Pre-Pit angeordnet ist.

7. Aufzeichnungsmedium (102) nach einem der Ansprüche 1 bis 5 wobei ein physischer Identifier-Header zum Speichern einer Spur-Zahl und einer Sektor-Zahl gegenüber der Mitte einer Spur verschoben und dann als Pre-Pit angeordnet wird.

8. Servo-Steuervorrichtung zum Einsatz in einer optischen Aufzeichnungs- und/oder Wiedergabevorrichtung mit einer Abtasteinheit (104) zum Lesen der Spuren eines optischen Aufzeichnungsmediums (102), **dadurch gekennzeichnet, dass** die Servo-Steuervorrichtung umfasst:
einen Fotodetektor (118), der ein von dem optischen Aufzeichnungsmedium (102) reflektiertes Lichtsignal als zwei Kanäle ausgibt, wobei die Wobbelungen entweder einzelner Pit-Spuren oder einzelner Land-Spuren phasenversetzt sind und die Wobbelungen der anderen Spuren phasengleich sind;
einen Wobbelsignal-Detektor (120, 122, 124, 126), der ein Wobbelsignal aus wenigstens einem Kanal der zwei Kanäle erfasst;
eine Wobbelsignal-Feststelleinrichtung (128), die feststellt, ob eine Spur, die momentan von der Abtasteinheit (104) gelesen wird, eine Pit-Spur oder eine Land-Spur ist und ein Feststellsignal liefert; und
eine Steuerung (130), die ein Steuersignal zum Steuern einer Servoeinrichtung zum Bewegen der Abtasteinheit (104) unter Verwendung des Feststellsignals und des erfassten Wobbelsignals erzeugt.

9. Servo-Steuerung nach Anspruch 8, wobei, wenn die Wobbelungen einzelner Land-Spuren und einzelner Pit-Spuren phasenversetzt sind, der Wobbelsignal-Detektor (120, 126) ein Pit-Wobbelsignal und ein Land-Wobbelsignal aus einem ersten Kanal erfasst, das der Summe von zwei von dem Fotodetektor ausgegebenen Signalen entspricht, wobei das erfasste Pit-Wobbelsignal und das Land-Wobbelsignal phasenversetzt sind.

10. Servo-Steuerung nach Anspruch 8, wobei, wenn die Wobbelungen einzelner Pit-Spuren eine Phasendifferenz von Π haben, die Wobbelungen einzelner Land-Spuren phasengleich sind, die auf einer Pit-Spur ausgebildeten Wobbelungen eine Phasendifferenz von π in Bezug auf die Wobbelungen einer in einer radialen Richtung angrenzenden Pit-Spur haben, und, wenn die auf einer Land-Spur ausgebildeten Wobbelungen eine Phasendifferenz von π in Bezug auf die Wobbelungen einer in einer radialen Richtung angrenzenden Land-Spur haben, der Wobbelsignal-Detektor (120, 126) ein Pit-Wobbelsignal aus einem ersten Kanal erfasst, das der Differenz zwischen zwei von dem Fotodetektor (118) ausgegebenen Signalen entspricht, und der Wobbelsignal-Detektor (120, 126) ein Land-Wobbelsignal aus einem zweiten Kanal erfasst, das der Summe von zwei von dem Fotodetektor (118) ausgegebenen Signalen entspricht.

11. Servo-Steuerung nach Anspruch 10, wobei die Steuerung (130) entsprechend dem Feststellsignal sowie dem Pit- und dem Land-Wobbelsignal die Positionen der Land-Spuren und der Pit-Spuren erfasst und erfasst, ob die Pit-/Land-Spurzahl eine ungerade Zahl oder eine gerade Zahl ist.

12. Servo-Steuerung nach Anspruch 8, wobei, wenn die Wobbelungen einzelner Land-Spuren eine Phasendifferenz von π haben, die Wobbelungen einzelner Pit-Spuren phasengleich sind, die auf einer Pit-Spur ausgebildeten Wobbelungen eine Phasendifferenz von π in Bezug auf die Wobbelungen einer in einer radialen Richtung angrenzenden Pit-Spur haben, und, wenn die auf einer Land-Spur ausgebildeten Wobbelungen eine Phasendifferenz von π in Bezug auf die Wobbelungen einer in einer radialen Richtung angrenzenden Land-Spur haben, der Wobbelsignal-Detektor (120, 126) ein Land-Wobbelsignal aus einem ersten Kanal erfasst, das der Differenz zwischen zwei von dem Fotodetektor (118) ausgegebenen Signalen entspricht, und der Wobbelsignal-Detektor (120, 126) ein Pit-Wobbelsignal aus einem zweiten Kanal erfasst, das der Summe der zwei von dem Fotodetektor (118) ausgegebenen Signale entspricht.

13. Servo-Steuerung nach Anspruch 12, wobei die Steuerung entsprechend dem Feststellsignal sowie dem Pit- und dem Land-Wobbelsignal die Positionen der Land-Spuren und der Pit-Spuren erfasst und erfasst, ob die Pit-/Land-Spurzahl eine ungerade Zahl oder eine gerade Zahl ist.

14. Servo-Steuerverfahren zum Einsatz in einer optischen Aufzeichnungs- und/oder Wiedergabevorrichtung mit einer Abtasteinheit (104) zum Lesen der Spuren eines optischen Aufzeichnungsmediums (102), **dadurch gekennzeichnet, dass** das Verfahren die folgenden Schritte umfasst:
a) Ausgeben eines von dem optischen Aufzeichnungsmedium (102) reflektierten Lichtsignals als zwei Kanäle, wobei die Wobbelungen entweder einzelner Pit-Spuren oder einzelner Land-Spuren phasenversetzt sind und die Wobbelungen der anderen einzelnen Spuren phasengleich sind;
b) Erfassen eines Wobbelsignals aus wenigstens einem Kanal der zwei Kanäle;
c) Feststellen, ob eine Spur, die momentan von der Abtasteinheit (104) gelesen wird, eine Pit-Spur oder eine Land-Spur ist, um ein Feststellsignal zu erzeugen; und
d) Steuern einer Servoeinrichtung zum Bewegen der Abtasteinheit (104) unter Verwendung des Feststellsignals und des erfassten Wobbelsignals.

15. Verfahren nach Anspruch 14, wobei, wenn die Wobbelungen einzelner Land-Spuren und einzelner Pit-Spuren phasenversetzt sind, in dem Schritt b) ein Pit-Wobbelsignal und ein Land-Wobbelsignal aus einem ersten Kanal erfasst werden, das der Summe von zwei von dem Fotodetektor ausgegebenen Signalen entspricht, wobei das erfasst Pit-Wobbelsignal und das Land-Wobbelsignal phasenversetzt sind.

16. Verfahren nach Anspruch 14, wobei, wenn die Wobbelungen einzelner Pit-Spuren eine Phasendifferenz von π haben, die Wobbelungen einzelner Land-Spuren phasengleich sind, die auf einer Pit-Spur ausgebildeten Wobbelungen eine Phasendifferenz von π in Bezug auf die Wobbelungen einer in einer radialen Richtung angrenzenden Pit-Spur haben, und, wenn die auf einer Land-Spur ausgebildeten Wobbelungen eine Phasendifferenz von π in Bezug auf die Wobbelungen einer in einer radialen Richtung angrenzenden Land-Spur haben, in Schritt b) ein Pit-Wobbelsignal aus einem ersten Kanal erfasst wird, das der Differenz zwischen zwei in dem Schritt a) ausgegebenen Signalen entspricht, und ein Land-Wobbelsignal aus einem zweiten Kanal erfasst wird, der der Summe von zwei in dem Schritt a) ausgegebenen Signalen entspricht.

17. Verfahren nach Anspruch 16, das des Weiteren den Schritt e) des Erfassens der Positionen der Land-Spuren und der Pit-Spuren sowie des Erfassens, ob die Pit-/Land-Spurzahl eine ungerade Zahl oder eine gerade Zahl ist, entsprechend dem Feststellsignal sowie dem Pit- und dem Land-Wobbelsignal umfasst.

18. Verfahren nach Anspruch 14, wobei, wenn die Wobbelungen einzelner Land-Spuren eine Phasendifferenz von π haben, die Wobbelungen einzelner Pit-Spuren phasengleich sind, die auf einer Land-Spur ausgebildeten Wobbelungen eine Phasendifferenz von π in Bezug auf die Wobbelungen einer in einer radialen Richtung angrenzender Land-Spur haben, und, wenn die auf einer Pit-Spur ausgebildeten Wobbelungen eine Phasendifferenz von π in Bezug auf die Wobbelungen einer in einer radialen Richtung angrenzenden Pit-Spur haben, in dem Schritt b) ein Land-Wobbelsignal aus einem ersten Kanal erfasst wird, das der Differenz zwischen zwei in dem Schritt a) ausgegebenen Signalen entspricht, und ein Pit-Wobbelsignal aus einem zweiten Kanal erfasst wird, das der Summe von zwei in dem Schritt a) ausgegebenen Signalen entspricht.

19. Verfahren nach Anspruch 18, das des Weiteren den Schritt e) des Erfassens der Positionen der Land-Spuren und der Pit-Spuren sowie des Erfassens, ob die Pit-/Land-Spurzahl eine ungerade Zahl oder eine gerade Zahl ist, entsprechend dem Feststellsignal sowie dem Pit- und dem Land-Wobbelsignal umfasst.

## Revendications

1. Support d'enregistrement (102) ayant des pistes de méplat et des pistes de sillon, dans lequel à la fois les pistes de méplat et les pistes de sillon wobulent et **caractérisé en ce que** les wobulations des pistes de sillon individuelles ou des pistes de méplat individuelles sont déphasées et les wobulations des autres pistes individuelles sont en phase, et la wobulation d'une piste de sillon a une différence de phase de π par rapport à la wobulation de la piste de sillon adjacente suivante dans une direction radiale, et la wobulation d'une piste de méplat a une différence de phase de π par rapport à la wobulation de la piste de méplat adjacente suivante dans une direction radiale.

2. Support d'enregistrement (102) selon la revendication 1, dans lequel les wobulations de pistes de sillon individuelles sont déphasées et les wobulations des pistes de méplat individuelles sont en phase.

3. Support d'enregistrement (102) selon la revendication 1, dans lequel les wobulations de pistes de sillon individuelles ont une différence de phase de π.

4. Support d'enregistrement (102) selon la revendication 2, dans lequel les wobulations de pistes de méplat individuelles sont déphasées et les wobulations de pistes de sillon individuelles sont en phase.

5. Support d'enregistrement (102) selon la revendication 4, dans lequel les wobulations de pistes de méplat individuelles ont une différence de phase de π.

6. Support d'enregistrement (102) selon l'une quelconque des revendications 1 à 5, dans lequel un en-tête d'identifiant physique pour mémoriser un numéro de piste et un numéro de secteur est placé dans une pré-microcuvette au centre d'une piste.

7. Support d'enregistrement (102) selon l'une quelconque des revendications 1 à 5, dans lequel un en-tête d'identifiant physique pour mémoriser un numéro de piste et un numéro de secteur est décalé par rapport au centre d'une piste pour être ensuite placé dans une pré-microcuvette.

8. Dispositif de servocommande à utiliser dans un dispositif d'enregistrement et/ou lecture optique ayant une unité de tête de lecture pour suivre un support d'enregistrement optique (102), **caractérisé en ce que** le dispositif de servocommande comporte :
un photodétecteur (118) pour délivrer en sortie sous forme de deux canaux un signal lumineux réfléchi par le support d'enregistrement optique (102) dans lequel les wobulations des pistes de sillon individuelles ou des pistes de méplat individuelles sont déphasées et les wobulations des autres pistes sont en phase,
un détecteur de signal de wobulation (120, 122, 124, 126) pour détecter un signal de wobulation provenant d'au moins un canal parmi les deux canaux,
un dispositif de détermination de signal de wobulation (128) pour déterminer si une piste qui est actuellement suivie par l'unité de tête de lecture (104) est une piste de microsillon ou une piste de méplat, et pour délivrer un signal de détermination, et
un contrôleur (130) pour générer un signal de commande afin de commander un asservissement pour déplacer l'unité de tête de lecture (104) en utilisant le signal de détermination et le signal de wobulation détecté.

9. Dispositif de servocommande selon la revendication 8, dans lequel si les wobulations de pistes de méplat individuelles et de pistes de sillon individuelles sont déphasées, le détecteur de signal de wobulation (120-126) détecte un signal de wobulation de sillon et un signal de wobulation de méplat provenant d'un premier canal correspondant à la somme de deux signaux délivrés en sortie par le photodétecteur, le signal de wobulation de sillon et le signal de wobulation de méplat détectés étant déphasés l'un par rapport à l'autre.

10. Dispositif de servocommande selon la revendication 8, dans lequel si les wobulations de pistes de sillon individuelles ont une différence de phase de π, les wobulations de pistes de méplat individuelles sont en phase, les wobulations formées sur une piste de sillon ont une différence de phase de π par rapport aux wobulations d'une piste de sillon adjacente dans une direction radiale, et si les wobulations formées sur une piste de méplat ont une différence de phase de π par rapport aux wobulations d'une piste de méplat adjacente dans une direction radiale, le détecteur de signal de wobulation (120-126) détecte un signal de wobulation de sillon provenant d'un premier canal correspondant à la différence entre deux signaux délivrés en sortie par le photodétecteur (118) et le détecteur de signal de wobulation (120-126) détecte un signal de wobulation de méplat provenant d'un second canal correspondant à la somme de deux signaux délivrés en sortie par le photodétecteur (118).

11. Dispositif de servocommande selon la revendication 10, dans lequel le contrôleur (130) détecte les positions des pistes de méplat et des pistes de sillon et détecte si le numéro de piste de sillon/méplat est un numéro pair ou un numéro impair, selon le signal de détermination et les signaux de wobulation de sillon et de méplat.

12. Dispositif de servocommande selon la revendication 8, dans lequel si les wobulations de pistes de méplat individuelles ont une différence de phase de π, les wobulations de pistes de sillon individuelles sont en phase, les wobulations formées sur une piste de sillon ont une différence de phase de π par rapport aux wobulations d'une piste de sillon adjacente dans une direction radiale, et si les wobulations formées sur une piste de méplat ont une différence de phase de π par rapport aux wobulations d'une piste de méplat adjacente dans une direction radiale, le détecteur de signal de wobulation (120-126) détecte un signal de wobulation de méplat provenant d'un premier canal correspondant à la différence entre deux signaux délivrés en sortie par le photodétecteur (118) et le détecteur de signal de wobulation (120-126) détecte un signal de wobulation de sillon provenant d'un second canal correspondant à la somme de deux signaux délivrés en sortie par le photodétecteur (118).

13. Dispositif de servocommande selon la revendication 12, dans lequel le contrôleur détecte les positions des pistes de méplat et des pistes de sillon et détecte si le numéro de piste de sillon/méplat est un numéro pair ou un numéro impair, conformément au signal de détermination et aux signaux de wobulation de sillon et de méplat.

14. Procédé de commande d'asservissement à utiliser dans un dispositif d'enregistrement et/ou lecture optique ayant une unité de tête de lecture (104) pour suivre un support d'enregistrement optique (102), **caractérisé en ce que** le procédé comporte les étapes consistant à :
(a) délivrer en sortie sous forme de deux canaux un signal lumineux réfléchi par le support d'enregistrement optique (102), les wobulations des pistes de sillon individuelles ou des pistes de méplat individuelles étant déphasées et les wobulations des autres pistes individuelles étant en phase,
(b) détecter un signal de wobulation provenant d'au moins un canal parmi les deux canaux,
(c) déterminer si une piste qui est actuellement suivie par l'unité de tête de lecture (104) est une piste de sillon ou une piste de méplat pour délivrer un signal de détermination, et
(d) commander un asservissement pour déplacer l'unité de tête de lecture (104) en utilisant le signal de détermination et le signal de wobulation détecté.

15. Procédé selon la revendication 14, dans lequel si les wobulations de pistes de méplat individuelles et de pistes de sillon individuelles sont déphasées, à l'étape (b), un signal de wobulation de sillon et un signal de wobulation de méplat sont détectés à partir d'un premier canal correspondant à la somme de deux signaux délivrés en sortie par le photodétecteur, le signal de wobulation de sillon détecté et le signal de wobulation de méplat étant déphasés.

16. Procédé selon la revendication 14, dans lequel si les wobulations de pistes de sillon individuelles ont une différence de phase de π, les wobulations de pistes de méplat individuelles sont en phase, les wobulations formées sur une piste de sillon ont une différence de phase de π par rapport aux wobulations d'une piste de sillon adjacente dans une direction radiale, et si les wobulations formées sur une piste de méplat ont une différence de phase de π par rapport aux wobulations d'une piste de méplat adjacente dans une direction radiale, à l'étape (b), un signal de wobulation de sillon est détecté à partir d'un premier canal correspondant à la différence entre deux signaux délivrés en sortie à l'étape (a) et un signal de wobulation de méplat est détecté à partir d'un second canal correspondant à la somme de deux signaux délivrés en sortie à l'étape (a).

17. Procédé selon la revendication 16, comportant en outre l'étape (e) consistant à détecter les positions des pistes de méplat et des pistes de sillon et à détecter si le numéro de piste de sillon/méplat est un numéro pair ou un numéro impair conformément au signal de détermination et aux signaux de wobulation de sillon et de méplat.

18. Procédé selon la revendication 14, dans lequel si les wobulations de pistes de méplat individuelles ont une différence de phase de x, les wobulations de pistes de sillon individuelles sont en phase, les wobulations formées sur une piste de méplat ont une différence de phase de π par rapport aux wobulations d'une piste de méplat adjacente dans une direction radiale, et si les wobulations formées sur une piste de sillon ont une différence de phase de **π** par rapport aux wobulations d'une piste de sillon adjacente dans une direction radiale, à l'étape (b), un signal de wobulation de méplat est détecté à partir d'un premier canal correspondant à la différence entre deux signaux délivrés en sortie à l'étape (a) et un signal de wobulation de sillon est détecté à partir d'un second canal correspondant à la somme de deux signaux délivrés en sortie à l'étape (a).

19. Procédé selon la revendication 18, comportant en outre l'étape (e) consistant à détecter les positions des pistes de méplat et des pistes de sillon et à détecter si le numéro de piste de sillon/méplat est un numéro pair ou un numéro impair conformément au signal de détermination et aux signaux de wobulation de sillon et de méplat.
